# EUROPÄISCHE PATENTANMELDUNG

(11) **EP 4 748 690 A1**
(43) Veröffentlichungstag der Anmeldung: **27.05.2026**
(21) Anmeldenummer: 25198865.5
(22) Anmeldetag: 28.08.2025
(51) Int. Cl.: B62D 35/00

(54) **LKW-FAHRZEUGANHÄNGER**

(30) Priorität: 26.11.2024 DE 202024106830 U
(71) Anmelder: System Trailers Fahrzeugbau GmbH, 49767 Twist (DE)
(72) Erfinder: SAATKAMP, Ralf, 49808 Lingen (DE)
(74) Vertreter: Patentanwälte Olbricht Buchhold Keulertz

(57) **Zusammenfassung**

Die Erfindung betrifft einen Fahrzeuganhänger mit einem Ladeboden und Hinterrädern, sowie mit einer Seitenverkleidung (5), die an der Längsseite des Fahrzeuganhängers tiefer als der Ladeboden angeordnet ist und sich in Längsrichtung bis vor die Hinterräder erstreckt. Erfindungsgemäß weist die Seitenverkleidung (5) einen oberen Abschnitt (6) und einen unteren Abschnitt (7) auf, wobei der untere Abschnitt (7) weiter innen, in Richtung zur Längs- oder Mittelachse des Fahrzeuganhängers hin, als der obere Abschnitt (6) verläuft.

## Beschreibung

Die Erfindung betrifft einen Lkw-Fahrzeuganhänger. Der Fahrzeuganhänger weist einen Ladeboden, Hinterräder sowie eine Seitenverkleidung auf, die an der Längsseite des Fahrzeuganhängers tiefer als der Ladeboden angeordnet ist und sich in Längsrichtung bis vor die Hinterräder erstreckt.

Lkw-Fahrzeuganhänger werden im Gebrauch von einer Lkw-Zugmaschine gezogen. Sie weisen, wenn sie als Auflieger ausgestaltet sind, ausschließlich Hinterräder auf, an einer oder an mehreren Hinterachsen, können je nach konstruktiver Ausgestaltung aber auch mit einer Vorderachse und dementsprechend mit Vorderrädern und einer Deichsel ausgestattet sein. Ein Ladeboden dient dazu, die Ladung aufzunehmen. Der Ladeboden kann als unterer Umfangsabschnitt eines Tanks ausgestaltet sein oder als ebene Fläche, beispielsweise bei einem Kastenaufbau oder bei einem Curtainsider, der eine flexible Seitenwand aufweist, die beispielsweise aus einer sogenannten Lkw-Plane bestehen kann. Nachfolgend werden die Lkw-Fahrzeuganhänger auch kurz als Fahrzeuganhänger oder nur Anhänger bezeichnet.

Es ist bekannt, dass während der Fahrt der Anhänger durch seine Ausgestaltung auch den Energieverbrauch des Zugfahrzeugs sowie dadurch verursachte Emissionen beeinflusst. Abgesehen von dem Eigengewicht und dem Rollwiderstand des Anhängers wirkt sich beispielsweise dessen Aerodynamik auf den Energieverbrauch des Zugfahrzeugs aus. Zur Verbesserung der Aerodynamik ist es bekannt, an den Längsseiten des Anhängers eine Seitenverkleidung anzuordnen, die sich vom Ladeboden oder von einem auf Höhe des Ladeboden verlaufenden Fahrzeugrahmen nach unten erstreckt.

Der Erfindung liegt die Aufgabezugrunde, einen möglichst wirtschaftlichen Betrieb des Lkw-Fahrzeuganhängers zu ermöglichen.

Erfindungsgemäße Merkmale sind im Anspruch 1 angegeben. Ausgestaltungen sind Gegenstand der Unteransprüche.

Erfindungsgemäß weist die Seitenverkleidung einen oberen Abschnitt und einen unteren Abschnitt auf, wobei der untere Abschnitt weiter innen, in Richtung zur Längs- oder Mittelachse des Fahrzeuganhängers hin, als der obere Abschnitt verläuft. Vorzugsweise verdeckt der obere Abschnitt einen Seitenanfahrschutz und ist der untere Abschnitt unterhalb des Seitenanfahrschutzes angeordnet. Im vertikalen Querschnitt gesehen verläuft der untere Abschnitt bevorzugt aufrecht und zu dem oberen Abschnitt besonders bevorzugt nach innen versetzt. In einer besonders vorteilhaften Ausgestaltung der Erfindung verläuft der untere Abschnitt am hinteren Ende der Seitenverkleidung schräg nach außen hin.

Die Aufgabe wird mit anderen Worten erfindungsgemäß dadurch gelöst, dass die Seitenverkleidung, über ihre Höhe gesehen, zwei unterschiedliche Abschnitte aufweist. Ein oberer Abschnitt befindet sich, in Längsrichtung des Anhängers gesehen, vergleichsweise weit außen und schließt beispielsweise an der Außenkante des Ladebodens oder des Fahrzeugrahmens von unten an den Ladeboden bzw. Fahrzeugrahmen an. Ein unterer Abschnitt der Seitenverkleidung ist im Vergleich zu dem oberen Abschnitt nach innen eingezogen, verläuft also näher zur Mittelachse oder Längsachse des Anhängers. Überraschend hat sich herausgestellt, dass Berechnungen zufolge die Aerodynamik des Anhängers auf diese Weise verbessert wird im Vergleich zu einem Anhänger, dessen Seitenverkleidung im Wesentlichen geradlinig über den Seitenanfahrschutz hinaus weiter nach unten verläuft. Erwartungsgemäß wird daher der Energieverbrauch des Zugfahrzeugs - und damit beispielsweise dessen CO2-Ausstoß im Falle einer Brennkraftmaschine als Antriebsmotor - positiv beeinflusst.

Je nach geltenden Vorschriften weisen die Anhänger häufig an ihren beiden Längsseiten jeweils einen Seitenanfahrschutz auf, der verhindern soll, dass Personen und / oder Kleinfahrzeuge, beispielsweise Radfahrer, unter den Anhänger geraten können. Zur Verbesserung der Aerodynamik kann der Seitenanfahrschutz nicht als offenes Gitter, sondern als geschlossene Fläche ausgestaltet werden, so dass die Seitenverkleidung gleichzeitig auch den Seitenanfahrschutz bildet, oder ein als offenes Gitter ausgestalteter Seitenanfahrschutz kann mittels der Seitenverkleidung nach außen abgedeckt werden. Der Abstand der Unterkante des Seitenanfahrschutzes vom Boden ist vorgeschrieben. Die Seitenverkleidung kann sich weiter nach unten erstrecken, als es für die Funktion des Seitenanfahrschutzes bzw. für dessen Verkleidung erforderlich ist, um so die Aerodynamik des Lkw-Fahrzeuganhängers weiter zu verbessern. Die Seitenverkleidung ist insbesondere in einem unteren Bereich, der sich unterhalb der für die Unterkante des Seitenanfahrschutzes vorgeschriebenen Höhe befindet, erheblich empfindlicher gegenüber einwirkenden Kräften, zum Beispiel gegenüber seitlichen Stößen, die an dieser Stelle auf den Fahrzeuganhänger einwirken.

Wenn der Fahrzeuganhänger beispielsweise von der Seite her mittels eines Gabelstaplers beladen wird, werden die Zinken der Hubgabel des Gabelstaplers üblicherweise ausreichend hoch geführt, so dass sie sich entweder ausschließlich auf dem Ladeboden oder im Abstand über dem Ladeboden des Anhängers befinden, oder so dass sie allenfalls in Kontakt mit einem sehr stabilen Fahrzeugrahmen kommen, der üblicherweise den Ladeboden trägt und sich oberhalb des Seitenanfahrschutzes befindet. Jedoch kann der Gabelstapler auch ohne Einwirkung der Hubgabel Schäden an der Seitenverkleidung bewirken, wenn der Gabelstapler sich nämlich dicht neben der Seite des Fahrzeuganhängers befindet und eine Drehbewegung vollführt, so dass dabei seine Karosserie unterhalb des Seitenanfahrschutzes mit der Seitenverkleidung kollidiert.

Dadurch, dass erfindungsgemäß der untere Abschnitt der Seitenverkleidung weiter innen verläuft als der obere Abschnitt, können derartige Kollisionen vermieden werden. Somit ergibt sich ein zweiter wirtschaftlicher Vorteil durch die erfindungsgemäße Ausgestaltung des Fahrzeuganhängers. In einer als besonders vorteilhaft erachteten Ausgestaltung weist der Fahrzeuganhänger dementsprechend einen Seitenanfahrschutz auf, den der obere Abschnitt der Seitenverkleidung verdeckt, und der untere Abschnitt der Seitenverkleidung ist unterhalb des Seitenanfahrschutzes angeordnet. Auf diese Weise besteht eine große konstruktive Freiheit dafür, wie der untere Abschnitt der Seitenverkleidung verlaufen kann, da unterhalb des Seitenanfahrschutzes in einem Raum von beispielsweise 5 cm und 30 cm von der Außenkante des Anhängers entfernt üblicherweise keine Störkonturen zu erwarten sind.

Dass der untere Abschnitt der Seitenverkleidung weiter innen verläuft als der obere Abschnitt, kann auf unterschiedliche Weise verwirklicht werden. Beispielsweise kann der untere Abschnitt gebogen oder geradlinig schräg nach unten und innen verlaufen. Ein besonders großer Freiraum, der Kollisionen mit Gabelstaplern zu vermeiden hilft, kann dadurch verwirklicht werden, dass in einer Ausgestaltung der Seitenverkleidung deren unterer Abschnitt ähnlich wie der obere Abschnitt aufrecht verläuft und lediglich zu dem oberen Abschnitt nach innen versetzt ist.

In einer Ausgestaltung verläuft der untere Abschnitt am hinteren Ende der Seitenverkleidung nach außen. Dies erfolgt nicht in Art einer rechtwinkligen Kante, sondern vielmehr durch einen geradlinigen oder gebogenen Verlauf nach außen, der in diesem Zusammenhang als Schrägfläche des unteren Abschnitts bezeichnet wird und als Abweiser für die Luft dient, die ansonsten während der Fahrt frontal vor die Räder des Fahrzeuganhängers prallen würde. Kurz vor dem einzigen oder dem vordersten Hinterrad auf dieser Seite des Anhängers verbessert diese nach außen verlaufende Schrägfläche des unteren Abschnitts die Aerodynamik des Anhängers noch weiter, da die am Fahrzeuganhänger entlang strömende Luft nicht vor die Hinterräder prallt, sondern mittels der Schrägfläche seitlich nach außen neben die Hinterräder geleitet wird.

Ein Abweiser, der dafür sorgt, dass die während der Fahrt anströmende Luft nicht frontal vor die Räder eines Fahrzeuganhängers prallt, sondern diese seitlich ableitet, kann abweichend von dem vorliegenden Vorschlag auch unabhängig von einer Seitenverkleidung oder zusammen mit einer Seitenverkleidung, die abweichend von dem vorliegenden Vorschlag ausgestaltet ist, vorteilhaft sein und die Aerodynamik eines Fahrzeuganhängers positiv beeinflussen. Beispielsweise kann der Abweiser den Luftstrom zur Fahrzeugmitte nach innen, zwischen die rechten und linken Räder des Fahrzeuganhängers leiten. Oder der Abweiser kann den Luftstrom teilen und einen Teil nach außen und den anderen Teil nach innen zur Fahrzeugmitte lenken. Ein Abweiser kann als einzelnes Element vor einem Rad des Fahrzeuganhängers angeordnet sein oder mit einer Seitenverkleidung zusammenwirken, wobei die Seitenverkleidung wie vorgeschlagen ausgestaltet sein kann, oder sie kann eine Durchbrechung vor dem Abweiser aufweisen, so dass in Verbindung mit dem Abweiser ein Luftstrom oder Teil-Luftstrom zur Fahrzeugmitte hin gelenkt wird.

Die Erfindung betrifft somit einen Fahrzeuganhänger, mit einem Ladeboden und Hinterrädern, sowie mit einer Seitenverkleidung, die an der Längsseite des Fahrzeuganhängers tiefer als der Ladeboden angeordnet ist und sich in Längsrichtung bis vor die Hinterräder erstreckt, wobei die Seitenverkleidung einen oberen Abschnitt und einen unteren Abschnitt aufweist, und wobei der untere Abschnitt weiter innen, in Richtung zur Längs- oder Mittelachse des Fahrzeuganhängers hin, als der obere Abschnitt verläuft.

Weiterhin kann die Erfindung in der Art ausgestaltet sein, dass der obere Abschnitt einen Seitenanfahrschutz verdeckt und der untere Abschnitt unterhalb des Seitenanfahrschutzes angeordnet ist.

Weiterhin kann die Erfindung in der Art ausgestaltet sein, dass im vertikalen Querschnitt gesehen der untere Abschnitt aufrecht und zu dem oberen Abschnitt nach innen versetzt verläuft.

Weiterhin kann die Erfindung in der Art ausgestaltet sein, dass der untere Abschnitt am hinteren Ende der Seitenverkleidung schräg nach außen hin verläuft.

Weitere Merkmale, Einzelheiten und Vorteile der Erfindung ergeben sich aus dem Wortlaut der Ansprüche sowie aus der folgenden Beschreibung von Ausführungsbeispielen anhand der rein schematischen Zeichnungen. Es zeigen:

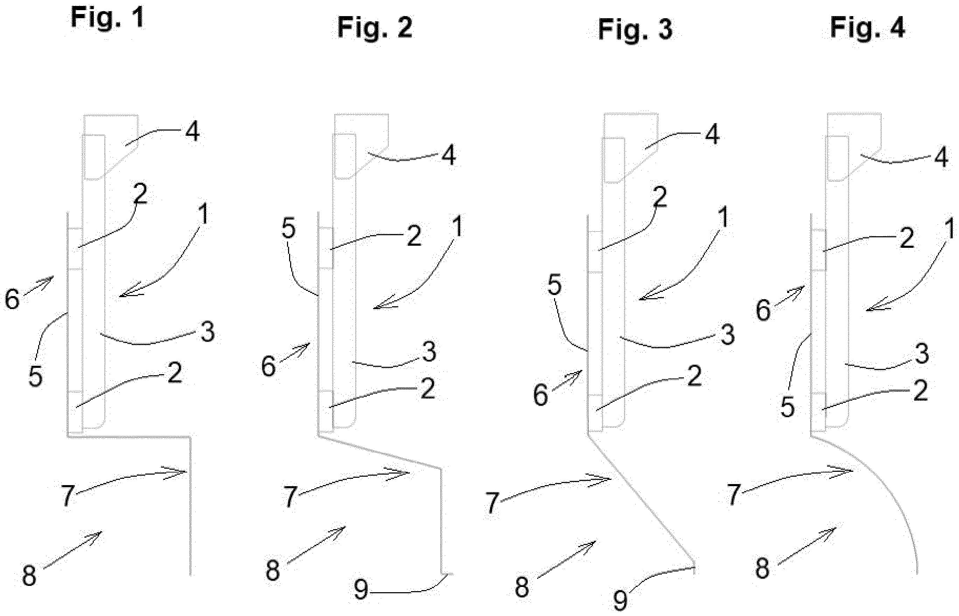

- Fig. 1 bis 4: jeweils einen Vertikalschnitt quer zur Längsachse an einer Längsseite eines Fahrzeuganhängers mit verschiedenen Ausführungsbeispielen von Seitenverkleidungen.

Die Fig. 1 bis 4 zeigen jeweils einen Seitenanfahrschutz 1, der zwei in Längsrichtung eines Fahrzeuganhängers horizontal verlaufende Schutzstreben 2 aufweist, die an vertikal verlaufenden Haltestreben 3 montiert sind, wobei wenigstens zwei Haltestreben 3 in Längsrichtung des Fahrzeuganhängers hintereinander angeordnet sind. Die Haltestreben 3 sind ihrerseits jeweils an einer Lasche 4 befestigt, die beispielsweise zum Anschluss einer Traverse an einen längsverlaufenden Außenrahmen des Fahrzeuganhängers dient, wobei der Außenrahmen auf Höhe des Ladebodens des Fahrzeuganhängers verläuft.

Der Seitenanfahrschutz 1 ist bei sämtlichen Ausführungsbeispielen mit einer flächigen Seitenverkleidung 5 abgedeckt, so dass im Vergleich zu der gitterartig offenen Konstruktion des Seitenanfahrschutzes 1 die Aerodynamik an der Längsseite des Fahrzeuganhängers durch die geschlossene, flächige Seitenverkleidung 5 verbessert wird. Bei sämtlichen Ausführungsbeispielen erstreckt sich die Seitenverkleidung 5 nicht nur bis zur Unterkante des Seitenanfahrschutzes 1, sondern darüber hinaus nach unten, wodurch die bei Aerodynamik des Fahrzeuganhängers weiter verbessert wird. Die Seitenverkleidung 5 weist folglich einen oberen Abschnitt 6 auf Höhe des Seitenanfahrschutzes 1 und darunter einen unteren Abschnitt 7 auf.

Bei dem Ausführungsbeispiel der Fig. 1 verläuft der untere Abschnitt 7 der Seitenverkleidung 5 von ihrem oberen Abschnitt 6 aus um 90° nach innen, zur Mittelachse des Fahrzeuganhängers hin, abgewinkelt und anschließend in einem Winkel von wiederum 90° nach unten. Die Seitenverkleidung 5 verläuft folglich von oben nach unten mit einem gewissen Versatz nach innen. Durch den Versatz wird unterhalb des Seitenanfahrschutzes 1 ein großer Freiraum 8 geschaffen. Geht man von einem vorbestimmten Maß aus, welches für den Versatz nach innen zur Verfügung steht, schafft die Seitenverkleidung 5 bei dem Ausführungsbeispiel der Fig. 1 einen maximal großen Freiraum 8.

Bei dem Ausführungsbeispiel der Fig. 2 ist der Freiraum 8 kleiner als beim Ausführungsbeispiel der Fig. 1, da der untere Abschnitt 7 der Seitenverkleidung 5 vom oberen Abschnitt 6 aus nicht horizontal nach innen, sondern schräg nach unten und innen verläuft. Weiterhin unterscheidet sich das Ausführungsbeispiel der Fig. 2 von dem der Fig. 1 dadurch, dass die Seitenverkleidung 5 am unteren Ende ihres unteren Abschnitts 7 eine abgewinkelte Kante 9 aufweist, die bei diesem Ausführungsbeispiel horizontal und nach innen, zur Fahrzeugmitte hin verläuft.

Bei dem Ausführungsbeispiel der Fig. 3 ist der Freiraum 8 wiederum kleiner als beim Ausführungsbeispiel der Fig. 2, weil sich der untere Abschnitt 7 in einem steiler abwärts verlaufenden Winkel nach unten erstreckt. Auch bei diesem Ausführungsbeispiel weist die Seitenverkleidung 5 an ihrem unteren Ende eine abgewinkelte Kante 9 auf, die sich anders als beim Ausführungsbeispiel der Fig. 2 vertikal nach unten erstreckt.

Bei dem Ausführungsbeispiel der Fig. 4 verläuft der untere Abschnitt 7 der Seitenverkleidung 5 konkav nach innen eingezogen bogenförmig.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Seitenanfahrschutz
- 2: Schutzstrebe
- 3: Haltestrebe
- 4: Lasche
- 5: Seitenverkleidung
- 6: Oberer Abschnitt
- 7: Unterer Abschnitt
- 8: Freiraum
- 9: Abgewinkelte Kante

## Patentansprüche

1. Fahrzeuganhänger,
mit einem Ladeboden
und Hinterrädern,
sowie mit einer Seitenverkleidung (5), die an der Längsseite des Fahrzeuganhängers tiefer als der Ladeboden angeordnet ist und sich in Längsrichtung bis vor die Hinterräder erstreckt,
**dadurch gekennzeichnet,**
**dass** die Seitenverkleidung (5) einen oberen Abschnitt (6) und einen unteren Abschnitt (7) aufweist,
wobei der untere Abschnitt (7) weiter innen, in Richtung zur Längs- oder Mittelachse des Fahrzeuganhängers hin, als der obere Abschnitt (6) verläuft.

2. Fahrzeuganhänger nach Anspruch 1,
**dadurch gekennzeichnet,**
**dass** der obere Abschnitt (6) einen Seitenanfahrschutz (1) verdeckt und der untere Abschnitt (7) unterhalb des Seitenanfahrschutzes (1) angeordnet ist.

3. Fahrzeuganhänger nach Anspruch 1 oder 2,
**dadurch gekennzeichnet,**
**dass** im vertikalen Querschnitt gesehen der untere Abschnitt (7) aufrecht und zu dem oberen Abschnitt (6) nach innen versetzt verläuft.

4. Fahrzeuganhänger nach einem der vorhergehenden Ansprüche,
**dadurch gekennzeichnet,**
**dass** der untere Abschnitt (7) am hinteren Ende der Seitenverkleidung (5) schräg nach außen hin verläuft.
